# EUROPEAN PATENT APPLICATION

(11) **EP 4 553 653 A1**
(43) Date of publication of application: **14.05.2025**
(21) Application number: 24194191.3
(22) Date of filing: 12.08.2024
(51) Int. Cl.: G06F 9/455

(54) **DPU FOR SENDING CONTROL INSTRUCTIONS FOR (VIRTUAL) CONTAINERS**

(30) Priority: 08.11.2023 CN 202311474312
(71) Applicant: Beijing Volcano Engine Technology Co., Ltd., Beijing 100190 (CN)
(72) Inventor: LI, Zebin, Beijing, 100028 (CN); FANG, Ying, Beijing, 100028 (CN)
(74) Representative: Dentons UK and Middle East LLP

(57) **Abstract**

The embodiments of the present disclosure provide a data transmission method, apparatus, device and storage medium. The method includes: generating, in response to a control instruction component within the DPU receiving a configuration request for at least one virtual container, a container operation instruction corresponding to the configuration request through the control instruction component and transmitting the container operation instruction to a communication component within the DPU; converting the container operation instruction into communication data conforming to a communication protocol corresponding to the communication component through the communication component, and forwarding the communication data to the container control component within the virtual machine; determining a control operation corresponding to the communication data through the container control component, and performing the control operation corresponding to the communication data on the at least one virtual container. Since the control instruction component and the communication component are installed within the DPU, the data transmission will not occupy the CPU consumption in the server, so the efficiency of the data transmission can be improved.

## Description

### CROSS-REFERENCE TO RELATED APPLICATION

The present disclosure claims the priority and benefits of Chinese patent application No. 202311474312.1 entitled "DATA TRANSMISSION METHOD, APPARATUS, DEVICE AND STORAGE MEDIUM" and filed in Chinese Patent Office on November 8, 2023, the entirety of which is incorporated into the present disclosure by reference.

### TECHNICAL FIELD

The embodiments of the present disclosure relate to the technical field of virtualization, in particular, to a data transmission method, apparatus, device and storage medium.

### BACKGROUND

With the development of virtualization technology, multiple virtual machines can be deployed on one server. Moreover, system configuration information of different virtual machines can be different, and number of virtual containers included thereby can also be different. In order to improve the flexibility of virtual machine system configuration information, the number of virtual containers within the virtual machine can further be adjusted.

In the prior art, a container control component can be installed in a virtual machine, and a container operation instruction can be sent to the container control component; and the container control component receives and executes the container operation instruction to complete the adjustment of the number of containers in the virtual machine.

However, the inventors have found that there are at least the technical problems in the prior art as follows: for each virtual machine, the container operation instruction sent to the container control component within the virtual machine will occupy the server's CPU resources, so that when there are plenty of container operation instructions, more consumption of CPU resources will be created, leading to a reduction in the speed at which the server transmits the container operation instructions and a lower data transmission efficiency.

### SUMMARY

The embodiments of the present disclosure provide a data transmission method, apparatus, device and storage medium which can reduce the CPU resource consumption and improve the data transmission efficiency.

In a first aspect, the embodiments of the present disclosure provides a data transmission method, the method is applied to a cloud service system including a server and a data processing unit (DPU), and wherein a virtual machine including a container control component and a plurality of virtual containers is deployed on the server, the method comprising:
generating, in response to a control instruction component within the DPU receiving a configuration request for at least one virtual container, a container operation instruction corresponding to the configuration request through the control instruction component, and transmitting the container operation instruction to a communication component within the DPU;
converting the container operation instruction into communication data conforming to a communication protocol corresponding to the communication component through the communication component, and forwarding the communication data to the container control component within the virtual machine; and
determining a control operation corresponding to the communication data through the container control component, and performing the control operation on the at least one virtual container.

In a second aspect, the embodiments of the present disclosure provides a data transmission apparatus, the data transmission apparatus is applied to a cloud service system including a server and a data processing unit DPU, and wherein a virtual machine including a container control component and a plurality of virtual containers is deployed on the server, the apparatus comprising:
a generation module, configured to generate, in response to a control instruction component within the DPU receiving a configuration request for at least one virtual container, a container operation instruction corresponding to the configuration request through the control instruction component and transmit the container operation instruction to a communication component within the DPU;
a conversion module, configured to convert the container operation instruction into the communication data conforming to a communication protocol corresponding to the communication component through the communication component, and forward the communication data to the container control component in the virtual machine; and
an execution module, configured to determine a control operation corresponding to the communication data through the container control component, and execute the control operation on the at least one virtual container.

In a third aspect, the embodiments of the present disclosure provides an electronic device comprising:
a processor and a memory in communication with the processor;
the memory stores computer-executable instructions; and
the processor executes the computer-executable instructions stored in the memory to implement the data transmission method according to the first aspect and various possible designs of the first aspect.

In a fourth aspect, the embodiments of the present disclosure provides a computer-readable storage medium characterized in having stored thereon computer-executable instructions which, when executed by a processor, causes the processor to implement the data transmission method according to the first aspect and various possible designs of the first aspect.

In a fifth aspect, the embodiments of the present disclosure provides a computer program product characterized in comprising a computer program which, when executed by a processor, causes the processor to implement the data transmission method according to the first aspect and various possible designs of the first aspect.

The embodiments of the present disclosure provide a data transmission method, apparatus, device and storage medium. The method includes: generating, in response to a control instruction component within the DPU receiving a configuration request for at least one virtual container, a container operation instruction corresponding to the configuration request through the control instruction component and transmitting the container operation instruction to a communication component within the DPU; converting the container operation instruction into communication data conforming to a communication protocol corresponding to the communication component through the communication component, and forwarding the communication data to the container control component within the virtual machine; determining a control operation corresponding to the communication data through the container control component, and performing the control operation corresponding to the communication data on the at least one virtual container. In the embodiments of the present application, by installing a control instruction component and a communication component within a DPU, a container operation instruction can be generated through the control instruction component, the container operation instruction can be sent to a virtual machine through the communication component, and moreover, since the control instruction component and the communication component are installed within the DPU, no CPU consumption in the server will be occupied, and the data transmission will not be affected by the CPU consumption, the data transmission efficiency can be improved.

### BRIEF DESCRIPTION OF DRAWINGS

In order to illustrate the embodiments of the present disclosure or the technical schemes in the prior art more clearly, the accompanying drawings required to be used in the description of the embodiments or the prior art will be briefly introduced below. Obviously, the accompanying drawings in the following description are some of the embodiments of the present disclosure, and for those ordinary skilled in the art, according to such accompanying drawings, other drawings can also be obtained without creative efforts.
Fig. 1 is a structural schematic diagram of a cloud service system provided by an embodiment of the present disclosure;
Fig. 2 is a flowchart of a data transmission method provided by an embodiment of the present disclosure;
Fig. 3 is a schematic diagram of a data transmission method provided by an embodiment of the present disclosure;
Fig. 4 is a flowchart of another data transmission method provided by an embodiment of the present disclosure;
Fig. 5 is a structural block diagram of a data transmission apparatus provided by an embodiment of the present disclosure; and
Fig. 6 is a hardware structural schematic diagram of an electronic device provided by an embodiment of the present disclosure.

### DETAILED DESCRIPTION

In order to make the purposes, technical schemes and advantages of the embodiments of the present disclosure clearer, in the following, a clear and complete description of the technical schemes in the embodiments of the present disclosure will be made in conjunction with the accompanying drawings in the embodiments of the present disclosure. Obviously, the described embodiments are a part of the embodiments of the present disclosure, but not all of the embodiments. Based on the embodiments in the present disclosure, all the other embodiments obtained by those ordinary skilled in the art without creative efforts belong to the protection scope of the present disclosure.

It should be noted that the user information (including but not limited to user device information, user personal information, etc.) and data (including but not limited to data for analysis, data for storage, data for exhibition, etc.) involved in the present application are all the information and data authorized by the user or sufficiently authorized by respective parties, and the collection, utilization and processing of relevant data are required to comply with relevant laws, regulations and standards, with corresponding operation portals provided for the user to select to authorize or reject.

With the development of virtualization technology, multiple virtual machines can be deployed on one server. Moreover, system configuration information of different virtual machines can be different, and the number of virtual containers included thereby can also be different. In order to improve the flexibility of virtual machine system configuration information, the number of virtual containers within the virtual machine can further be adjusted.

In the prior art, a container control component can be installed in a virtual machine, and a container operation instruction can be sent to the container control component; and the container control component receives and executes the container operation instruction to accomplish the adjustment of the number of containers in the virtual machine. However, for each virtual machine, the container operation instruction sent to the container control component within the virtual machine will occupy the server's CPU (Central Processing Unit) resources, so that when there are plenty of container operation instructions, more consumption of CPU resources will be created, leading to a reduction in the speed at which the server transmits the container operation instructions and a lower data transmission efficiency.

Thus it can be seen that how to reduce the CPU resource consumption to improve the data transmission efficiency is an urgent problem to be solved at present.

In the prior art, a control instruction component for generating container control command is deployed on a CPU of a server, so that the CPU resources will be occupied in the process of generating a container control command by the control instruction component, thus increasing the CPU resource consumption; moreover, the control command component is also required to transmit the container control command to the container control component, and execute the container control command through the container control component. The process of transmitting the container control command will also occupy the CPU resources, thus further increasing the CPU resource consumption.

In order to reduce the CPU resource consumption, a DPU (Data Processing Unit) may be deployed in a cloud service system, and some of the applications on the virtual machine may be offloaded to the DPU, so as to reduce the CPU consumption of the server, improve the utilization efficiency of the server, reduce the energy consumption of the server, and add more advantages in cost for the cloud service provider.

In the embodiments of the present disclosure, the control instruction components of multiple virtual containers (applications on the original virtual machine) can be offloaded to the DPU and become applications on the DPU after being offloaded. After the offloading, the container control instructions generated by the control instruction components need to be transmitted from the DPU to the virtual machine. Therefore, there is a need for establishing communication between the virtual machine and the DPU.

Before the offloading (e.g., in a non-DPU scenario), command forwarding operations among different components are completed on a same operating system on a same physical machine, so the mutual communications can be made directly through interfaces provided by the operating system.

However, after the offloading (e.g., in a DPU scenario), due to the way of offloading, an original homogeneous operating environment with a same operating system has been divided into a heterogeneous environment with different operating systems, so it is impossible to communicate directly through the interfaces provided by the operating systems. Therefore, how to establish a communication between the virtual machine and the DPU after offloading the control instruction component to the DPU is a technical problem that must be solved.

In order to solve the above problem, this embodiment further provides technical concepts as follows: a control instruction component and a communication component are installed within a DPU (Data Processing Unit), and a communication between a virtual machine and the DPU is established through the communication component. The specific steps may include: firstly, generating, in response to the control instruction component within the DPU receiving a configuration request for at least one virtual container, a container operation instruction corresponding to the configuration request through the control instruction component, and transmitting the container operation instruction to the communication component within the DPU; then, converting the container operation instruction into communication data conforming to a communication protocol corresponding to the communication component through the communication component within the DPU, and forwarding the converted communication data to a container control component within the virtual machine; and finally, determining a control operation corresponding to the communication data through the container control component, and performing the control operation on the at least one virtual container.

Here, by installing a control instruction component and a communication component within a DPU, a container operation instruction can be generated through the control instruction component, the container operation instruction can be sent to a virtual machine through the communication component, and moreover, since the control instruction component and the communication component are installed within the DPU, and no CPU consumption in the server will be occupied, no influence will be incurred by the CPU consumption, thereby improving the data transmission efficiency.

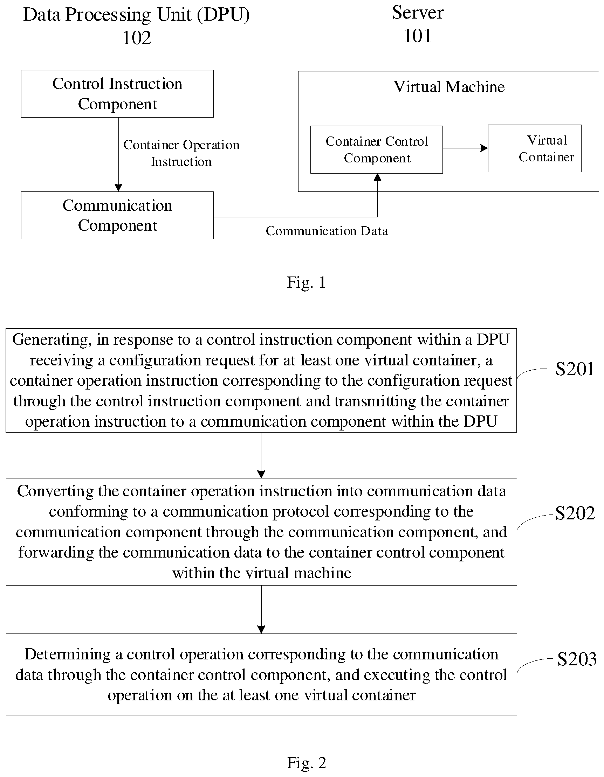

An application scenario of the embodiments of the present disclosure is explained as follows:
The data transmission method provided by the embodiments of the present disclosure can be applied to a scenario of data transmission between a server and a DPU in a cloud service system. The information between the server and the DPU can be a container operation instruction for multiple containers in a virtual machine deployed on the server. Fig. 1 is a structural schematic diagram of a cloud service system provided by an embodiment of the present disclosure. As shown in Fig. 1, the cloud service system includes a server 101 and a data processing unit DPU 102. A virtual machine including a container control component and a plurality of virtual containers is deployed on the server 101. A control instruction component is installed the DPU 102, and the control instruction component may generate a container control instruction for at least one virtual container. After receiving the container control instruction, the container control component on the virtual machine deployed on the server 101 may adjust a number of at least one virtual container according to the container control instruction. In the process of performing the container control instruction, it is required to establish a communication between the DPU 102 and the server 101, and transmit the container control instruction generated by the control instruction component on the DPU 102 to the container control component on the virtual machine deployed on server 101. In order to reduce the resource consumption of the server 101, the present application proposes to deploy a communication component on the DPU 102, and establish a communication between the DPU 102 and the server 101 through the communication component on the DPU 102. As such, the process of transmitting the container control instruction will not be affected by the CPU consumption of the server, so that the transmission efficiency of information (e.g., container control instruction) can be improved. In the following, the data transmission method provided by the embodiments of the present disclosure will be illustrated in detail with the following detailed embodiments.

Fig. 2 is a flowchart of a data transmission method provided by an embodiment of the present disclosure. The data transmission method can be applied to a cloud service system including a server and a data processing unit DPU, in which a virtual machine including a container control component and a plurality of virtual containers is deployed on the server. As shown in Fig. 2, the method includes:
S201: generating, in response to a control instruction component within the DPU receiving a configuration request for at least one virtual container, a container operation instruction corresponding to the configuration request through the control instruction component and transmitting the container operation instruction to a communication component within the DPU.

In the embodiments of the present disclosure, the configuration request for the virtual containers may be a request to adjust the number of virtual containers, or a request to adjust the configuration information for the virtual containers. In some embodiments, the configuration request for the virtual containers may be a configuration request to increase the number of the plurality of virtual containers in the virtual machine, or a configuration request to decrease the number of the plurality of virtual containers in the virtual machine. In some other embodiments, the configuration request for the virtual containers may be a request to increase the running memory of the virtual containers, or a request to decrease the running memory of the virtual containers.

Optionally, the server may generate a configuration request for the at least one virtual container and send the configuration request to the control instruction component within the DPU. In some embodiments, the generation of the configuration request may be triggered by the user using the virtual machine. For example, when the user needs to adjust the system configuration of the virtual machine, an adjustment request may be sent to the server, and the server generates the configuration request and sends the configuration request to the control instruction component within the DPU. For example, the user adds virtual containers for service A through the terminal. At this time, the terminal may send an adjustment request to the server, and the server generates a configuration request to increase the number of virtual containers.

In some other embodiments, the generation of the configuration request may also be automatically triggered by the server. For example, when the number of requests processed by the virtual machine increases, the running pressure of the virtual machine increases, and at this time, the server may automatically trigger the generation of a configuration request to increase the number of virtual containers. For another example, when the number of requests processed by the virtual machine decreases, the running pressure of the virtual machine decreases, and at this time,the server may automatically trigger the generation of a configuration request to reduce the number of virtual containers.

Optionally, the control instruction component within the DPU may be a control plane component for at least one virtual container. Exemplarily, the control plane component may be a containerd component, through which a container operation instruction for at least one virtual container may be generated.

In the embodiment of the present disclosure, the communication components within the DPU can be a communication component conforming to any communication protocol. Optionally, the communication component is in any of the following forms: a communication component conforming to virtio-vsock communication protocol, a communication component conforming to IP communication protocol or a communication component conforming to TCP communication protocol.

It should be noted that a communication component of virtio-vsock communication protocol can provide a socket operation interface to a user application (e.g., containerd component), and in turn complete the interaction between the virtual machine and a host machine through virito protocol. Compared with communication protocols such as TCP/IP, the virito protocol can simplify the content of protocol stack and reduce the difficulty of implementation, and can improve the communication efficiency between the virtual machine and the host machine.

Here, since both the control instruction component and the communication component are offloaded to the DPU, so as to sufficiently utilize the heterogeneous computing capability of the novel DPU hardware, the CPU consumption of the server can be reduced.

S202: converting the container operation instruction into communication data conforming to a communication protocol corresponding to the communication component through the communication component, and forwarding the communication data to the container control component within the virtual machine.

In the embodiments of the present disclosure, the communication protocol may be determined through interface information corresponding to the communication component. Accordingly, the converting the container operation instruction into communication data conforming to a communication protocol corresponding to the communication component through the communication component includes: acquiring interface information corresponding to the communication component; determining a communication protocol corresponding to the interface information; converting the container operation instruction into communication data conforming to the communication protocol through the communication component.

Optionally, the communication component is a vsock-user component conforming to the virtio-vsock communication protocol. Accordingly, the acquiring interface information corresponding to the communication component and determining a communication protocol corresponding to the interface information includes: acquiring the interface information corresponding to the vsock-user component as unix socket interface; determining, according to the unix socket interface, the communication protocol corresponding to the unix socket interface as virtio-vsock communication protocol from a correspondence between the stored interface information and the communication protocol.

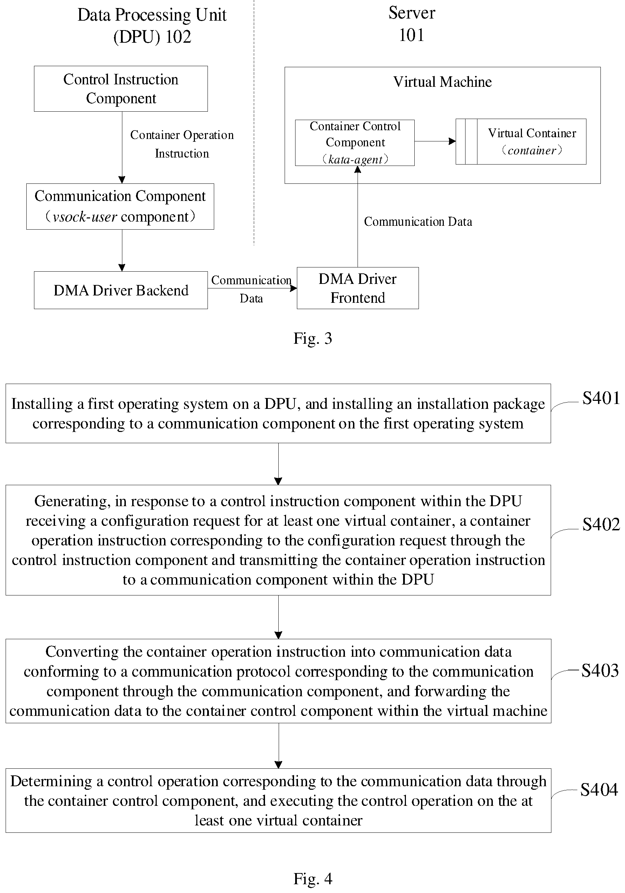

In the embodiment of the present disclosure, the communication data may be forwarded to the container control component within the virtual machine through a DMA (Direct Memory Access) driver. The DMA driver is equivalent to a network cable that transmits communication data. Optionally, as shown in Fig. 3, a direct memory access DMA driver backend is installed on the DPU, and a DMA driver frontend for data transmission with the DMA driver backend is installed on the server. Accordingly, the forwarding the communication data to the container control component within the virtual machine includes: transmitting the communication data to the DMA driver backend through the communication component, and transmitting, in response to the completion of the communication data transmission, a transmission completion instruction to the DMA driver backend through the communication component; transmitting, in response to the DMA driver backend receiving the transmission completion instruction, the communication data to the DMA driver frontend through the DMA driver backend; forwarding the communication data to the container control component within the virtual machine through the DMA driver frontend. Exemplarily, as shown in Fig. 3, the communication component is a vsock-user component. The virtual container can be represented by container. The container control component can be represented by kata-agent.

In this process, the communication component (e.g., vsock-user component) may run on the DPU as an independent process, and is used to receive the container operation instruction sent by the control instruction component and convert the container operation instruction into the communication data conforming to the communication protocol corresponding to the communication component. Further, by transmitting the transmission completion instruction to the DMA driver backend, the DMA driver backend may be operated to transmit the communication data to the DMA driver frontend, thus realizing the reading, writing and copying of the communication data.

S203: determining a control operation corresponding to the communication data through the container control component, and performing the control operation on the at least one virtual container.

In the embodiment of the present disclosure, in order to determine the specific operation's content of the container operation instruction, the communication data is required to be parsed through the container control component. Accordingly, this step includes: parsing the communication data through the container control component to obtain container adjustment information corresponding to the container operation instruction; determining a control operation corresponding to the container adjustment information, and performing a control operation corresponding to the container adjustment information on the at least one virtual container.

Optionally, the container adjustment information includes one or more of: increasing a number of virtual containers, reducing a number of virtual containers, increasing running memory of at least one virtual container, reducing running memory of at least one virtual container, increasing storage space of at least one virtual container, and reducing storage space of at least one virtual container. The container adjustment information may further include information on an adjusted numeric value.

Exemplarily, the container adjustment information corresponding to the container operation instruction may be to increase a number of the virtual containers, the increased number is 1. Accordingly, a control operation corresponding to the container adjustment information is adding one virtual container.

Exemplarily, the container adjustment information corresponding to the container operation instruction may be to reducing a number of the virtual containers, the reduced number is 2. Accordingly, a control operation corresponding to the container adjustment information is reducing two virtual containers.

The data transmission method provided by this embodiment includes: generating, in response to a control instruction component within the DPU receiving a configuration request for at least one virtual container, a container operation instruction corresponding to the configuration request through the control instruction component and transmitting the container operation instruction to a communication component within the DPU; converting the container operation instruction into communication data conforming to a communication protocol corresponding to the communication component through the communication component, and forwarding the communication data to the container control component within the virtual machine; determining a control operation corresponding to the communication data through the container control component, and performing the control operation corresponding to the communication data on the at least one virtual container. In the embodiments of the present application, by installing a control instruction component and a communication component within a DPU, a container operation instruction can be generated through the control instruction component, the container operation instruction can be sent to a virtual machine through the communication component, and moreover, since the control instruction component and the communication component are installed within the DPU, no consumption of the CPU in the server will be occupied, and the data transmission will not be affected by the CPU consumption, the data transmission efficiency can be improved.

In one embodiment of the present disclosure, a first operating system installed on the DPU may be different from a second operating system installed on the server, so that both the control instruction component and the communication component may be offloaded to the DPU. Accordingly, as shown in Fig. 4, before transmitting the container operation instruction to the communication component within the DPU, the method further includes S401: installing the first operating system on the DPU, and installing an installation package corresponding to the communication component on the first operating system.

It should be noted that the interface information corresponding to the communication component may be set as fixed interface information whose interface properties are prohibited from being modified. Exemplarily, the communication component is a vsock-user component, and the interface information corresponding to the communication component is unix socket interface, which can be set as a fixed interface whose interface properties are prohibited from being modified.

In the embodiments of the present disclosure, since the interface information corresponding to the communication component is set as fixed interface information, so that the stability of the user interface can be maintained, the data transmission efficiency can be further improved.

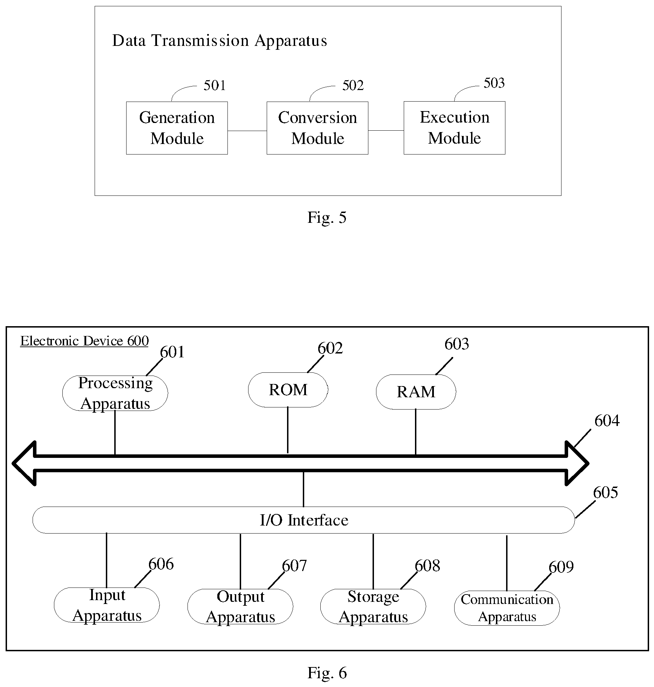

Fig. 5 is a structural block diagram of a data transmission apparatus provided by an embodiment of the present disclosure. The data transmission apparatus is applied to a cloud service system including a server and a data processing unit DPU, in which a virtual machine including a container control component and a plurality of virtual containers is deployed on the server, and the apparatus includes: a generation module 501, a conversion module 502 and an execution module 503;
the generation module 501 is configured to generate, in response to a control instruction component within the DPU receiving a configuration request for at least one virtual container, a container operation instruction corresponding to the configuration request through the control instruction component and send the container operation instruction to a communication component within the DPU;
the conversion module 502 is configured to convert the container operation instruction into communication data conforming to a communication protocol corresponding to the communication component through the communication component, and forward the communication data to the container control component in the virtual machine;
the execution module 503 is configured to determine a control operation corresponding to the communication data through the container control component, and execute the control operation on the at least one virtual container.

According to one or more embodiments of the present disclosure, the conversion module 502 converting the container operation instruction into communication data conforming to a communication protocol corresponding to the communication component through the communication component specifically includes: acquiring interface information corresponding to the communication component and determining a communication protocol corresponding to the interface information; converting the container operation instruction into communication data conforming to the communication protocol through the communication component.

According to one or more embodiments of the present disclosure, the communication component is a vsock-user component conforming to the virtio-vsock communication protocol. Accordingly, the conversion module 502 acquiring interface information corresponding to the communication component and determining a communication protocol corresponding to the interface information specifically includes: acquiring the interface information corresponding to the vsock-user component as unix socket interface; determining, according to the unix socket interface, the communication protocol corresponding to the unix socket interface as virtio-vsock communication protocol from a correspondence between the stored interface information and the communication protocol.

According to one or more embodiments of the present disclosure, a direct memory access DMA driver backend is installed on the DPU, and a DMA driver frontend for data transmission with the DMA driver backend is installed on the server. Accordingly, the conversion module 502 forwarding the communication data to the container control component within the virtual machine specifically includes: transmitting the communication data to the DMA driver backend through the communication component, and transmitting, in response to the completion of the communication data transmission, a transmission completion instruction to the DMA driver backend through the communication component; transmitting, in response to the DMA driver backend receiving the transmission completion instruction, the communication data to the DMA driver frontend through the DMA driver backend; forwarding the communication data to the container control component within the virtual machine through the DMA driver frontend.

According to one or more embodiments of the present disclosure, the execution module 503 determining a control operation corresponding to the communication data through the container control component, and performing the control operation on the at least one virtual container specifically including: parsing the communication data through the container control component to obtain container adjustment information corresponding to the container operation instruction; determining a control operation corresponding to the container adjustment information, and performing a control operation corresponding to the container adjustment information on the at least one virtual container; in which the container adjustment information includes one or more of: increasing a number of virtual containers, reducing a number of virtual containers, increasing running memory of at least one virtual container, reducing running memory of at least one virtual container, increasing storage space of at least one virtual container, and reducing storage space of at least one virtual container.

According to one or more embodiments of the present disclosure, a first operating system installed on the DPU is different from a second operating system installed on the server. Accordingly, the apparatus also includes an installation module; the installation module is configured to install the first operating system on the DPU, and installing an installation package corresponding to the communication component on the first operating system.

According to one or more embodiments of the present disclosure, the interface information corresponding to the communication component is fixed interface information whose interface properties are prohibited from being modified.

According to one or more embodiments of the present disclosure, the communication component is in any of the following forms: a communication component conforming to virtio-vsock communication protocol, a communication component conforming to IP communication protocol or a communication component conforming to TCP communication protocol.

The generation module 501, the conversion module 502 and the execution module 503 are connected in sequence. The data transmission apparatus provided by this embodiment can implement the technical scheme of the above method embodiment, both of who have similar implementation principles and technical effects, and will not be detailed here by this embodiment.

Fig. 6 is a hardware structural schematic diagram of an electronic device provided by an embodiment of the present disclosure. Referring to Fig. 6, the electronic device 600 may be a terminal device or a server. The terminal device may include, but is not limited to, mobile terminal such as mobile phone, notebook computer, digital broadcast receiver, Personal Digital Assistant (PDA), Portable Android Device (PAD), Portable Multimedia Player (PMP), vehicle-mounted terminal (e.g., vehicle-mounted navigation terminal), etc., as well as stationary terminal such as digital TV, desktop computer, etc. The electronic device shown in Fig. 6 is merely an example, and should not bring any limitation to the function and application scope of the embodiments of the present disclosure.

As shown in Fig. 6, the electronic device 600 may include a processing apparatus (e.g., a central processing unit, a graphics processing unit, etc.) 601, which may perform various appropriate actions and processes according to a program stored in a Read Only Memory (ROM) 602 or a program loaded from a storage 608 into a Random Access Memory (RAM) 603. The RAM 603 further stores various programs and data required for the operations of the electronic device 600. The processing apparatus 601, the ROM 602 and the RAM 603 are connected to each other through a bus 604. An input/output (I/O) interface 605 is also connected to the bus 604.

Usually, the following apparatus may be connected to the I/O interface 605: an input apparatus 606 including, for example, a touch screen, a touch pad, a keyboard, a mouse, a camera, a microphone, an accelerometer, a gyroscope, or the like; an output apparatus 607 including, for example, a liquid crystal display (LCD), a loudspeaker, a vibrator, or the like; a storage apparatus 608 including, for example, a magnetic tape, a hard disk, or the like; and a communication apparatus 609. The communication apparatus 609 may allow the electronic device 600 to be in wireless or wired communication with other devices to exchange data. While FIG. 6 illustrates the electronic device 600 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 609 and installed, or may be installed from the storage apparatus 608, or may be installed from the ROM 602. When the computer program is executed by the processing apparatus 601, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

The above computer-readable medium either may be contained in the electronic device; or may exist alone without being assembled into the electronic device.

The above computer-readable medium carries one or more programs, which, when executed by the electronic device, cause the electronic device to perform the method as shown in the above embodiments.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The units involved in the embodiments described in the present disclosure can either be implemented by means of software, or be implemented by means of hardware. The name of unit does not constitute the limitation of the unit itself in some case. For example, the first acquisition unit can also be described as "a unit that acquires at least two internet protocol addresses ".

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a tangible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

In a first aspect, according to one or more embodiments of the present disclosure, there is provided a data transmission method, the method is applied to a cloud service system including a server and a data processing unit (DPU), and wherein a virtual machine including a container control component and a plurality of virtual containers is deployed on the server, the method comprising:
generating, in response to a control instruction component within the DPU receiving a configuration request for at least one virtual container, a container operation instruction corresponding to the configuration request through the control instruction component, and transmitting the container operation instruction to a communication component within the DPU;
converting the container operation instruction into communication data conforming to a communication protocol corresponding to the communication component through the communication component, and forwarding the communication data to the container control component within the virtual machine; and
determining a control operation corresponding to the communication data through the container control component, and performing the control operation on the at least one virtual container.

According to one or more embodiments of the present disclosure, the converting the container operation instruction into the communication data conforming to the communication protocol corresponding to the communication component through the communication component comprises: acquiring interface information corresponding to the communication component and determining a communication protocol corresponding to the interface information; and converting the container operation instruction into the communication data conforming to the communication protocol through the communication component.

According to one or more embodiments of the present disclosure, the communication component is a vsock-user component conforming to a virtio-vsock communication protocol; accordingly, the acquiring interface information corresponding to the communication component and determining the communication protocol corresponding to the interface information comprises: acquiring the interface information corresponding to the vsock-user component as a unix socket interface; and determining, according to the unix socket interface, the communication protocol corresponding to the unix socket interface as the virtio-vsock communication protocol from a correspondence between the stored interface information and the communication protocol.

According to one or more embodiments of the present disclosure, a direct memory access DMA driver backend is installed on the DPU, and a DMA driver frontend for data transmission with the DMA driver backend is installed on the server;
accordingly, the forwarding the communication data to the container control component within the virtual machine comprises:
transmitting the communication data to the DMA driver backend through the communication component, and transmitting, in response to completion of the transmission of the communication data, a transmission completion instruction to the DMA driver backend through the communication component; and
transmitting, in response to the DMA driver backend receiving the transmission completion instruction, the communication data to the DMA driver frontend through the DMA driver backend; and forwarding the communication data to the container control component within the virtual machine through the DMA driver frontend.

According to one or more embodiments of the present disclosure, the determining the control operation corresponding to the communication data through the container control component, and performing the control operation on the at least one virtual container comprises: parsing the communication data through the container control component to obtain container adjustment information corresponding to the container operation instruction; and determining a control operation corresponding to the container adjustment information, and performing the control operation corresponding to the container adjustment information on the at least one virtual container; wherein the container adjustment information includes one or more of: increasing a number of virtual containers, reducing the number of virtual containers, increasing a running memory of at least one virtual container, reducing a running memory of at least one virtual container, increasing a storage space of at least one virtual container, and reducing a storage space of at least one virtual container.

According to one or more embodiments of the present disclosure, a first operating system installed on the DPU is different from a second operating system installed on the server; accordingly, before transmitting the container operation instruction to the communication component within the DPU, the method further comprises: installing the first operating system on the DPU, and installing an installation package corresponding to the communication component on the first operating system.

According to one or more embodiments of the present disclosure, the interface information corresponding to the communication component is fixed interface information whose interface properties are prohibited from being modified.

According to one or more embodiments of the present disclosure, the communication component is in any of the following forms: a communication component conforming to a virtio-vsock communication protocol, a communication component conforming to an IP communication protocol or a communication component conforming to a TCP communication protocol.

In a second aspect, according to one or more embodiments of the present disclosure, there is provided a data transmission apparatus, the data transmission apparatus is applied to a cloud service system including a server and a data processing unit DPU, and wherein a virtual machine including a container control component and a plurality of virtual containers is deployed on the server, the apparatus comprising:
a generation module, configured to generate, in response to a control instruction component within the DPU receiving a configuration request for at least one virtual container, a container operation instruction corresponding to the configuration request through the control instruction component and transmit the container operation instruction to a communication component within the DPU;
a conversion module, configured to convert the container operation instruction into the communication data conforming to a communication protocol corresponding to the communication component through the communication component, and forward the communication data to the container control component in the virtual machine; and
an execution module, configured to determine a control operation corresponding to the communication data through the container control component, and execute the control operation on the at least one virtual container.

According to one or more embodiments of the present disclosure, the conversion module converting the container operation instruction into the communication data conforming to the communication protocol corresponding to the communication component through the communication component comprises: acquiring interface information corresponding to the communication component and determining a communication protocol corresponding to the interface information; and converting the container operation instruction into the communication data conforming to the communication protocol through the communication component.

According to one or more embodiments of the present disclosure, the communication component is a vsock-user component conforming to a virtio-vsock communication protocol; accordingly, the conversion module acquiring interface information corresponding to the communication component and determining the communication protocol corresponding to the interface information comprises: acquiring the interface information corresponding to the vsock-user component as a unix socket interface; and determining, according to the unix socket interface, the communication protocol corresponding to the unix socket interface as the virtio-vsock communication protocol from a correspondence between the stored interface information and the communication protocol.

According to one or more embodiments of the present disclosure, a direct memory access DMA driver backend is installed on the DPU, and a DMA driver frontend for data transmission with the DMA driver backend is installed on the server; accordingly, the conversion module forwarding the communication data to the container control component within the virtual machine comprises: transmitting the communication data to the DMA driver backend through the communication component, and transmitting, in response to completion of the transmission of the communication data, a transmission completion instruction to the DMA driver backend through the communication component; and transmitting, in response to the DMA driver backend receiving the transmission completion instruction, the communication data to the DMA driver frontend through the DMA driver backend; and forwarding the communication data to the container control component within the virtual machine through the DMA driver frontend.

According to one or more embodiments of the present disclosure, the execution module determining the control operation corresponding to the communication data through the container control component, and performing the control operation on the at least one virtual container comprises: parsing the communication data through the container control component to obtain container adjustment information corresponding to the container operation instruction; and determining a control operation corresponding to the container adjustment information, and performing the control operation corresponding to the container adjustment information on the at least one virtual container; wherein the container adjustment information includes one or more of: increasing a number of virtual containers, reducing the number of virtual containers, increasing a running memory of at least one virtual container, reducing a running memory of at least one virtual container, increasing a storage space of at least one virtual container, and reducing a storage space of at least one virtual container.

According to one or more embodiments of the present disclosure, a first operating system installed on the DPU is different from a second operating system installed on the server; accordingly, the apparatus further comprises an installation module for installing the first operating system on the DPU, and installing an installation package corresponding to the communication component on the first operating system.

According to one or more embodiments of the present disclosure, the interface information corresponding to the communication component is fixed interface information whose interface properties are prohibited from being modified.

According to one or more embodiments of the present disclosure, the communication component is in any of the following forms: a communication component conforming to a virtio-vsock communication protocol, a communication component conforming to an IP communication protocol or a communication component conforming to a TCP communication protocol.

In a third aspect, according to one or more embodiments of the present disclosure, there is provided an electronic device, characterized in comprising: a processor and a memory in communication with the processor;
the memory stores computer-executable instructions; and
the processor executes the computer-executable instructions stored in the memory to implement the data transmission method according to the first aspect and various possible designs of the first aspect.

In a fourth aspect, according to one or more embodiments of the present disclosure, there is provided a computer-readable storage medium characterized in having stored thereon computer-executable instructions which, when executed by a processor, causes the processor to implement the data transmission method according to the first aspect and various possible designs of the first aspect.

In a fifth aspect, according to one or more embodiments of the present disclosure, there is provided a computer program product characterized in comprising a computer program which, when executed by a processor, causes the processor to implement the data transmission method according to the first aspect and various possible designs of the first aspect.

The above description is only the preferred embodiments of the present disclosure and the illustration of the applied technical principles. It should be understood by those skilled in the art that the disclosed scope involved in the present disclosure is not limited to the technical schemes formed by specific combinations of the above technical features, but also should encompass the other technical schemes formed by any combination of the above technical features or their equivalent features without departing from the above disclosed concept, e.g., the other technical schemes formed by mutual substitution of the above features and the technical features with similar functions (but not limited thereto) disclosed in the present disclosure.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in language specific to structural features and/or methodological logical actions, it should be understood that the subject matter defined in the appended claims is not necessarily limited to the specific features or actions described above. On the contrary, the specific features and actions described above are merely exemplary forms of implementing the claims.

## Claims

1. A data transmission method, **characterized in that** the method is applied to a cloud service system including a server and a data processing unit (DPU), and wherein a virtual machine including a container control component and a plurality of virtual containers is deployed on the server, the method comprising:
generating, in response to a control instruction component within the DPU receiving a configuration request for at least one virtual container, a container operation instruction corresponding to the configuration request through the control instruction component, and transmitting the container operation instruction to a communication component within the DPU;
converting the container operation instruction into communication data conforming to a communication protocol corresponding to the communication component through the communication component, and forwarding the communication data to the container control component within the virtual machine; and
determining a control operation corresponding to the communication data through the container control component, and performing the control operation on the at least one virtual container.

2. The method according to claim 1, **characterized in that** the converting the container operation instruction into the communication data conforming to the communication protocol corresponding to the communication component through the communication component comprises:
acquiring interface information corresponding to the communication component and determining a communication protocol corresponding to the interface information; and
converting the container operation instruction into the communication data conforming to the communication protocol through the communication component.

3. The method according to claim 2, **characterized in that** the communication component is a vsock-user component conforming to a virtio-vsock communication protocol;
accordingly, the acquiring interface information corresponding to the communication component and determining the communication protocol corresponding to the interface information comprises:
acquiring the interface information corresponding to the vsock-user component as a unix socket interface; and
determining, according to the unix socket interface, the communication protocol corresponding to the unix socket interface as the virtio-vsock communication protocol from a correspondence between the stored interface information and the communication protocol.

4. The method according to claim 1, **characterized in that** a direct memory access DMA driver backend is installed on the DPU, and a DMA driver frontend for data transmission with the DMA driver backend is installed on the server;
accordingly, the forwarding the communication data to the container control component within the virtual machine comprises:
transmitting the communication data to the DMA driver backend through the communication component, and transmitting, in response to completion of the transmission of the communication data, a transmission completion instruction to the DMA driver backend through the communication component; and
transmitting, in response to the DMA driver backend receiving the transmission completion instruction, the communication data to the DMA driver frontend through the DMA driver backend; and forwarding the communication data to the container control component within the virtual machine through the DMA driver frontend.

5. The method according to claim 1, **characterized in that** the determining the control operation corresponding to the communication data through the container control component, and performing the control operation on the at least one virtual container comprises:
parsing the communication data through the container control component to obtain container adjustment information corresponding to the container operation instruction; and
determining a control operation corresponding to the container adjustment information, and performing the control operation corresponding to the container adjustment information on the at least one virtual container; wherein the container adjustment information includes one or more of: increasing a number of virtual containers, reducing the number of virtual containers, increasing a running memory of at least one virtual container, reducing a running memory of at least one virtual container, increasing a storage space of at least one virtual container, and reducing a storage space of at least one virtual container.

6. The method according to claim 1, **characterized in that** a first operating system installed on the DPU is different from a second operating system installed on the server;
accordingly, before transmitting the container operation instruction to the communication component within the DPU, the method further comprises:
installing the first operating system on the DPU, and installing an installation package corresponding to the communication component on the first operating system.

7. The method according to claim 6, **characterized in that** the interface information corresponding to the communication component is fixed interface information whose interface properties are prohibited from being modified.

8. The method according to any of claims 1-7, **characterized in that** the communication component is in any of the following forms: a communication component conforming to a virtio-vsock communication protocol, a communication component conforming to an IP communication protocol or a communication component conforming to a TCP communication protocol.

9. A data transmission apparatus, **characterized in that** the data transmission apparatus is applied to a cloud service system including a server and a data processing unit DPU, and wherein a virtual machine including a container control component and a plurality of virtual containers is deployed on the server, the apparatus comprising:
a generation module, configured to generate, in response to a control instruction component within the DPU receiving a configuration request for at least one virtual container, a container operation instruction corresponding to the configuration request through the control instruction component and transmit the container operation instruction to a communication component within the DPU;
a conversion module, configured to convert the container operation instruction into the communication data conforming to a communication protocol corresponding to the communication component through the communication component, and forward the communication data to the container control component in the virtual machine; and
an execution module, configured to determine a control operation corresponding to the communication data through the container control component, and execute the control operation on the at least one virtual container.

10. The data transmission apparatus according to claim 9, **characterized in that** the conversion module is further configured to:
acquire interface information corresponding to the communication component and determining a communication protocol corresponding to the interface information; and
convert the container operation instruction into the communication data conforming to the communication protocol through the communication component.

11. The data transmission apparatus according to claim 10, **characterized in that** the communication component is a vsock-user component conforming to a virtio-vsock communication protocol;
accordingly, the conversion module is further configured to:
acquire the interface information corresponding to the vsock-user component as a unix socket interface; and
determine, according to the unix socket interface, the communication protocol corresponding to the unix socket interface as the virtio-vsock communication protocol from a correspondence between the stored interface information and the communication protocol.

12. The data transmission apparatus according to claim 9, **characterized in that** a direct memory access DMA driver backend is installed on the DPU, and a DMA driver frontend for data transmission with the DMA driver backend is installed on the server;
accordingly, the conversion module is further configured to:
transmit the communication data to the DMA driver backend through the communication component, and transmitting, in response to completion of the transmission of the communication data, a transmission completion instruction to the DMA driver backend through the communication component; and
transmit, in response to the DMA driver backend receiving the transmission completion instruction, the communication data to the DMA driver frontend through the DMA driver backend; and forward the communication data to the container control component within the virtual machine through the DMA driver frontend.

13. The data transmission apparatus according to claim 9, **characterized in that** the execution module is further configured to:
parse the communication data through the container control component to obtain container adjustment information corresponding to the container operation instruction; and
determine a control operation corresponding to the container adjustment information, and performing the control operation corresponding to the container adjustment information on the at least one virtual container; wherein the container adjustment information includes one or more of: increasing a number of virtual containers, reducing the number of virtual containers, increasing a running memory of at least one virtual container, reducing a running memory of at least one virtual container, increasing a storage space of at least one virtual container, and reducing a storage space of at least one virtual container.

14. An electronic device, **characterized in** comprising: a processor and a memory in communication with the processor;
the memory stores computer-executable instructions; and
the processor executes the computer-executable instructions stored in the memory to implement the data transmission method according to any of claims 1-8.

15. A computer-readable storage medium **characterized in** having stored thereon computer-executable instructions which, when executed by a processor, cause the processor to implement the data transmission method according to any of claims 1-8.
